# EUROPEAN PATENT SPECIFICATION

(11) **EP 3 775 690 B1**
(45) Date of publication and mention of the grant of the patent: **12.08.2026**
(21) Application number: 19718588.7
(22) Date of filing: 04.04.2019
(51) Int. Cl.: F23J 15/02, F24B 1/00, F24H 3/00, B01D 53/88

(54) **METHOD FOR PROVIDING CLEAN RESIDENTIAL COMFORT HEATING**
VERFAHREN ZUR BEREITSTELLUNG VON SAUBERER WOHNRAUMKOMFORTBEHEIZUNG
PROCÉDÉ DE FOURNITURE D'UN CHAUFFAGE DE CONFORT RÉSIDENTIEL PROPRE

(30) Priority: 04.04.2018 SE 1850373
(43) Date of publication of application: 17.02.2021
(73) Proprietor: Contura AB, 285 23 Markaryd (SE)
(72) Inventor: NILSSON, Bo, 312 60 Mellbystrand (SE); SJÖBLOM, Jonas, 462 60 Vänersborg (SE); STRÖM, Henrik, 444 54 Stenungsund (SE)
(74) Representative: AWA Sweden AB
(86) International application number: PCT/EP2019/058481
(87) International publication number: WO 2019/193084

(56) References cited:
- EP-A2- 2 256 411
- EP-A2- 2 256 411
- DE-A1- 19 627 028
- DE-A1- 19 627 028
- US-A1- 2004 161 373
- US-A1- 2004 161 373
- US-A1- 2012 048 158
- US-A1- 2012 048 158

## Description

### Field of invention

The invention relates to a method for providing residential comfort heating, comprising regeneration of a purifying filter. The invention also relates to a system for providing residential comfort heating.

### Technical Background

Within the field of residential comfort heating, indoor stoves are sometimes employed to provide heating in a space. These stoves may be used to burn chopped wood, wood which has been processed into pellets, or other kinds of biomass. Burning of such biomass may give rise to exhaust gases containing particulate matter, sometimes known colloquially as soot. Said particulate matter may be harmful to human health or to the environment, and may contribute to contamination of the surroundings. For this reason, it may be desirous to filter out particulate matter of the exhaust gases. However, as particulate matter collects on a filter in the flow path of the exhaust gases, the permeability of the filter may diminish. This may lead to an unsatisfactory flow of exhaust gases in the flow path, and may lead to poor performance of the stove, and may cause backdraft of exhaust gases into the residential space, which may be harmful or unpleasant for humans occupying the residential space.

DE19627028 A1 relates to a flue gas cleaner for chimneys of wood-burning domestic heaters/boilers comprising a forced draught chimney containing regenerable particle and chemical filters.

EP2256411 A2 relates to a biomass heater, provided with an electrostatic filter in a pipe that has a flow channel provided with a channel wall and a channel interior part, and a particle rejecting unit implemented as a thermally induced moving element.

US2012/048158 A1 relates to an emission control apparatus which can be used on an outdoor wood-fired boiler. Ambient air, which has a much higher concentration of available oxygen in relation to exhaust gases, is caused to be heated before being passed through catalyst-coated media along with exhaust gases, thereby improving the performance of the catalytic reaction.

US2004/161373 relates to a honeycomb filter comprising a honeycomb structure having a large number of through channels formed in the axial direction and partitioned by porous partition walls, wherein specified through channels are plugged only on one end face at the same side out of two end faces.

For at least the reasons stated above, there exists a need for a better way of handling exhaust gases while providing comfort heating.

### Summary of invention

It is an object of the invention to mitigate at least some of the problems stated in the background section. This object has been achieved by the method according to claim 1.

The biomass may be solid or particulate. The biomass may e.g. be wood, such as chopped wood, wood which has been processed into pellets, or other kinds of combustible biomass. By regenerating the filter by allowing particulate matter in the filter to combust, the exhaust path may be at least partly cleared of deposited particulate matter thereby restoring the flow capacity of the purifying filter. This may reduce the need to exchange or otherwise clean the filter: Moreover, the regeneration may combust particles into gases. The hot exhaust gases may by themselves provide sufficient heat to accomplish the regeneration of the purifying filter. This sufficient heat may be accomplished by the burning of the biomass as such. Alternatively, this sufficient heat is accomplished by the burning of the biomass and by providing additional heating of the exhaust gases. As an alternative to the exhaust gases providing sufficient heat as such, the purifying filter as such may as an alternative or as a complement be heated by an additional heater, such as resistive heater. According to the invention, the purifying filter is as such heated to a regeneration temperature. In such a design the regeneration may be accomplished irrespective of if hot exhaust gases are provided or not. According to one embodiment, the purifying filter as such is heated to a temperature which is lower than the regeneration temperature, whereby regeneration is accomplished by providing hot exhaust gases at a regeneration temperature; the hot exhaust gases being heated by the burning of biomass and optionally also by an additional air heater. In this latter embodiment, there may be use of a filter heater not necessarily capable of generating sufficiently high temperature to accomplish regeneration but capable of providing a great amount of heat energy pre-heating the filter such that the hot exhaust gases provided at a regeneration temperature are not excessively cooled whereby the hot exhaust gases may accomplish regeneration of the whole filter. The whole filter may e.g. be said to be the complete length of the filter as seen along the flow path in the filter.

The room heater may e.g. be a stove, a fireplace insert or a fireplace cassette/inset in an open fire place. A stove often is a free-standing unit with a closed burn chamber. The stove is connected to a flue pipe through which exhaust gases is directed to the outside environment. Air for the burning of the biomass may be drawn from the space as such. More preferably the air for the burning of the biomass is drawn from an outside environment via an air pipe for fresh air. Such an air pipe may e.g. be positioned such that it extends through an external wall of a building, or such that it extends through a floor structure of a building, such as from an external side wall of a concrete slab and through the concrete slab to the position of the stove, or through an air pipe extending alongside the flue pipe.

As indicated above, the purifying filter is, according to the invention, positioned in the smoke channel of the room heater, i.e. inside the casing of the room heater. According to an alternative thereof, not coming within the invention claimed herein, the purifying filter is positioned in the flue pipe, i.e. outside the casing of the room heater.

The method further comprises providing additional heating of the purifying filter, and further providing additional heating of said exhaust gases in the smoke channel or flue pipe using an air heater such that the additionally heated exhaust gases directed through the purifying filter may reach a regeneration temperature of the purifying filter. The additional heating of the exhaust gases may be performed before the hot exhaust gases enters the purifying filter. This facilitates design of the additional heater and design of the purifying filter. The additional heating of the exhaust gases may alternatively or as a complement be accomplished inside the purifying filter. This may be useful to secure that the exhaust gases are at a regeneration temperature through the whole filter.

Providing additional heating may increase the amount of particulate matter which may combust. Furthermore, it may allow regeneration of the filter even at lower burn temperatures, enabling a wider range of temperatures at which to burn the biomass in the stove while still being able to regenerate the filter.

An additional heater may be positioned in the flow of exhaust gases inside the flue pipe.

According to the invention as claimed herein, the additional heater is positioned around the filter and as such typically being in contact with the filter but not in direct contact with the flow of exhaust gases. It may be noted that the phrase "in the filter" is in this context intended to refer to as being in the physical portions of the filter rather than being inside a flow channel of the purifying filter.

It is also possible to regenerate the filter without any combustion taking place in the burn chamber by utilizing the additional heater to heat the filter to a regeneration temperature without the aid of exhaust gases. Such a set-up is especially applicable when using an additional heater being positioned in the filter or , as claimed herein, around the filter.

The method further comprises heat insulating the purifying filter and may further comprise heat insulating at least a portion of the stove and/or the smoke channel or flue pipe between the burn chamber and the purifying filter.

Insulation of a portion of the stove and/ or the smoke channel or flue pipe and/or the purifying filter will typically reduce heat losses and may thereby to a greater extent maintain the temperature of exhaust gases passing through the filter. This may reduce the burn temperature required and/or it may reduce the need for additional heating of the purifying filter and/or exhaust gases. By heat insulating a portion of the stove and/or a portion of the flue pipe, the temperature of the hot exhaust gases transferred to the purifying filter is maintained to a greater extent. By heat insulating the purifying filter the temperature of the filter can be maintained more easily over time and it facilitates the provision of a regeneration temperature through the whole purifying filter.

The purifying filter may comprise a catalytic surface material.

Catalytic materials are known to increase the rate of chemical reactions, such as combustion, happening on surfaces made from the catalytic material. Having the purifying filter comprise a catalytic surface material may decrease the combustion temperature of particulate matter collected on the surface of the filter. This will increase the regeneration efficiency. The catalytic surface material is preferably of a kind lowering the temperature necessary to accomplish combustion of any material caught on the surface of the purifying filter. This will make it easier to accomplish regeneration of the purifying filter.

The purifying filter comprises an electrode configured to electrically charge particles and/or molecules in the exhaust gases, and a collector carrying an opposite charge, relative to the electrically charged particles, or being charge neutral.

By this design, particulate matter can be collected from exhaust gases without having a filter membrane obstructing the flow of the exhaust gases, thereby avoiding or mitigating a pressure drop over the regenerating filter.

The collector may further comprise a collection member, preferably comprising a catalytic surface material, extending across a flow path formed by the smoke channel or flue pipe.

By this design, particulate matter travelling along the flow path of the exhaust gases may come in proximity to the collection member, thereby enabling collection of said particulate matter. By providing a catalytic surface material, an efficient regeneration may be provided at moderate temperatures.

The collector further comprises inside wall portions, preferably comprising a catalytic surface material, of the smoke channel or flue pipe.

In this way, the inside wall portions of the collector may collect particulate matter from exhaust gases in the flue pipe without overly obstructing the flow path of the exhaust gases. By providing a catalytic surface material, an efficient regeneration may be provided at moderate temperatures.

It may be noted that the collection member extending across the flow path may be arranged downstream the inside wall portions. The collection member extending across the flow path may be connected to the inside wall portions and basically form a cup shaped collector, typically an inverted cup shaped collector considering that the smoke channel or flue pipe typically extends upwardly from the burn chamber. Alternatively, the collection member extending across the flow path may be separated from the inside wall portions. It may be noted that separated may mean electrically separated from but positioned in close vicinity to. It may be noted that separated may mean positioned at a distance from but in electrical contact with. It may be noted that separated may mean electrically separated from and positioned at a distance from. The collection member extending across the flow path may be arranged upstream the inside wall portions. Since the smoke channel or flue pipe typically extends upwardly from the burn chamber, downstream would typically mean above and upstream would typically mean below.

The electrode may comprise a first portion and a second portion.

The first portion may extend from a wall of the smoke channel or flue pipe a distance into a flow path formed by the smoke channel or flue pipe.

The first portion may be electrically insulated by an insulator.

The second portion may extend a distance inside the flow path formed by the smoke channel or flue pipe, preferably a distance along the flow path.

The second portion may be configured to electrically charge particles and/or molecules in the exhaust gases.

This conceptual design with a first portion extending from a wall of the smoke channel or flue pipe a distance into a flow path and being electrically insulated facilitates the actual design of how to provide a lead-through of the electrode or a connection between an electrode inside the smoke channel or flue pipe and an electrical voltage source outside the smoke channel or flue pipe. The conceptual design also provides a self-cleaning functionality for the electrical insulator. The distance of the first portion by which the electrode extends from the wall and along which it is electrically insulated is longer than the arc gap of the voltage used in the electrode. However, if particles, such as ash from the burning of the biomass in the burn chamber, is accumulated on the insulator, the particles may act as a bridging point such that a spark may be formed. The spark will heat up the particle such that it will be burnt and the electrical insulator will thereby automatically be cleaned.

A portion of the electrode may coextend, as seen along the flow path, with a portion of the inside wall portions of the collector. Preferably, a portion of the electrode including a free end of the electrode coextends, as seen along the flow path, with a portion of the inside wall portions of the collector. The inside wall portions may extend, as seen along the flow path, a distance past the electrode.

The purifying filter may comprise a membrane through which the exhaust gases pass.

Having a membrane intersect the flow path of exhaust gases may allow for collection of a quantity of particulate matter from said exhaust gases.

The purifying filter may comprise a plurality of inlet channels and a plurality of outlet channels, the inlet channels being separated from the outlet channels by membranes, the membranes having a total surface area greater than a cross-sectional area of a flow path formed by the flue pipe.

By this design, it is possible to force exhaust gases to pass a filter area being large compared to the geometrical cross-sectional area of the smoke channel or flue pipe where the filter is placed. Exhaust gases passing a large surface area of the filter may enable collection of a large amount of particulate matter from the exhaust gases.

The purifying filter may have a pressure drop of between 50-500 Pa, preferably between 100-300 Pa, at a flow rate of 40m³/h at 300°C.

The purifying filter may comprise a plurality of through-going channels, each preferably having a cross-sectional area being less than 1% of a cross-sectional area of a flow path formed by the flue pipe. By providing a filter having a great number of through-going channels, it is possible to catch a significant amount of particles on the inside walls of the through-going channels and still allow for the provision of a filter having a comparably low pressure drop. The purifying filter and the through-going channels formed therein have preferably a length along the flow paths being at least five times a smallest cross-sectional width of the through-going channels.

The method may further comprise exchanging air in the burn chamber by configuring the flue pipe and an air inlet to the burn chamber to provide a natural draft drawing air into the burn chamber and expelling exhaust gases via the flue pipe to the outdoor environment.

In this way, a draft may be created which may provide oxygen for the combustion process in the burn chamber and at the same time help to expel exhaust gases via the flue pipe.

The method may further comprise drawing air into the burn chamber and expelling exhaust gases via the flue pipe to the outdoor environment using a fan, the fan preferably being positioned after the purifying filter as seen along a flow direction through the flue pipe, the fan more preferably being positioned in the vicinity of a flue pipe mouth towards the outdoor environment.

The fan may pull air through the purifying filter, enabling the pressure drop over the purifying filter to be mitigated and the flow of exhaust gases increased. Furthermore, the fan may be configured to ramp up if pressure on the purifying filter from the burn chamber suddenly decreases, allowing for the oven to be opened with less backdraft of exhaust gas into the residential space. In the vicinity may e.g. relate to a top portion of the flue pipe, the top portion extending from the top end of the flue pipe and having a length being less than 25%, preferably being less than 10%, of the length of the flue pipe as measured from a transition from the burn chamber to the flue pipe to the flue pipe mouth towards the environment.

The flue pipe may be provided with a bypass selectively allowing exhaust gases to bypass the purifying filter.

In this way, when the stove is opened, for instance to add more biomass to the fire, exhaust gases may be expelled by way of the bypass instead of the filter while the oven is open thereby reducing backdraft of exhaust gases into the residential space.

The regeneration temperature may be between 300-600 °C, preferably between 350-500 °C.

These temperature ranges may provide efficient regeneration of the filter. These temperature ranges are also readily achievable in a stove burning biomass; either by the burning as such or with limited amount of additional heating.

The above mentioned object has also been achieved by a system for providing residential comfort heating in a space in a building, the system comprising the features as defined in claim 10.

Such a system may provide comfort heating for a residential space while being efficient with regards to filtering exhaust gases. The features and the advantages associated with respective feature has been discussed in detail above. The advantages associated with the respective features are equally applicable to the system. It may also be noted that the preferred embodiments disclosed in relation to the method is also equally applicable to the system.

It may be noted that, beyond the invention claimed herein, the different parts of the system may be manufactured, marketed, and/or sold as separate items. It is e.g. conceivable that the purifying filter is manufactured, marketed, and/or sold as a separate item. Such a separately marketed purifying filter may be configured to be installed in a flue pipe or smoke channel of an already installed room heater but may also be installed at the same time the room heater is installed. The purifying filter and the flue pipe may alternatively be manufactured, marketed, and/or sold as a unit or as a kit of parts. Such a unit may be configured to be installed in a flue pipe of an already installed room heater, or to partly or completely replace a flue pipe of an already installed room heater, but may also be installed at the same time the room heater is installed.

Thus, disclosed is a system for purifying exhaust gases, the exhaust gases coming from a room heater having a burn chamber and being configured to provide residential comfort heating in a space in a building, and the exhaust gases being directed from the burn chamber to an outdoor environment outside the building via a flue pipe,
the system comprising:
a purifying filter being configured to be positioned in a smoke channel of the room heater or in the flue pipe and configured to purify said exhaust gases directed through the purifying filter, the purifying filter being configured to be regenerated by providing hot exhaust gases at a regeneration temperature of the exhaust gas purifying filter.

Thus, disclosed is a system for purifying exhaust gases, the exhaust gases coming from a room heater having a burn chamber and being configured to provide residential comfort heating in a space in a building,
the system comprising:
a flue pipe configured to direct hot exhaust gases from the burn chamber to an outdoor environment outside the building, and
a purifying filter positioned in the flue pipe and configured to purify said exhaust gases directed through the purifying filter, the purifying filter being configured to be regenerated by providing hot exhaust gases at a regeneration temperature of the exhaust gas purifying filter.

The features and the advantages associated with respective feature has been discussed in detail above. The advantages associated with the respective features are equally applicable to the various systems. It may also be noted that the preferred embodiments disclosed in relation to the method is also equally applicable to the various systems. Any of the above systems may e.g. also include a fan manufactured, marketed, and/or sold as part of the unit or kit of parts formed by the system. Any of the above systems may e.g. also include a bypass manufactured, marketed, and/or sold as part of the unit or kit of parts formed by the system. Any of the above systems may e.g. also include a heater manufactured, marketed, and/or sold as part of the unit or kit of parts formed by the system.

It may be noted that, not claimed herein, a system comprising a purifying filter and optionally also comprising the other components, such as an additional heater, a fan, and/or a bypass, may be arranged in a pipe as an add-on beside a flue pipe extending from the room heater. The pipe of the add-on system may be connected with an inlet to the flue pipe and an outlet to the flue pipe, the inlet being positioned upstream the outlet as seen along the flow direction in the flue pipe. The exhaust gases may then be directed through the system to be purified and the pipe of the add-on system will then form part of the flue pipe configured to direct hot exhaust gases from the burn chamber to an outdoor environment outside the building and the purifying filter is positioned in that part of the flue pipe. Such an add-on configuration may be installed at the same time as the room heater and a standard flue pipe is installed. Such an add-on configuration may be installed in an already installed system with a room heater and a flue pipe more or less simply by providing two openings in the flue pipe such that the inlet and the outlet of the add-on system may be connected to the flue pipe. The flue pipe extending alongside the add-on system may be configured to be used as the bypass. The add-on system may be provided with a fan drawing the exhaust gases into the flue pipe of the add-on system and expelling the exhaust gases back into the flue pipe extending further to the outdoor environment. Activation and deactivation of such a fan may be used as a control of whether the exhaust gases will flow through the add-on system and the purifying filter therein or if the exhaust gases will flow through the bypass formed by the flue pipe extending from the room heater to the outdoor environment.

### Brief description of the drawings

The invention will by way of example be described in more detail with reference to the appended schematic drawings, which show presently preferred embodiments of the invention.
Figure 1 shows a residential space with a system for providing residential comfort heating.
Figure 2a shows a stove with a purifying filter of a first kind, not coming within the invention as claimed herein.
Figure 2b shows an alternative embodiment of the design shown in figure 2a, which comes within the invention as claimed herein.
Figure 3a shows a stove with a purifying filter of a second kind, not coming within the invention as claimed herein.
Figure 3b shows an alternative embodiment of the design shown in figure 3a, not coming within the invention as claimed herein.
Figure 3c shows yet another alternative embodiment of the design shown in figures 3a and 3b, and also discloses a purifying filter of a third kind, not coming within the invention as claimed herein.

### Detailed description of preferred embodiments

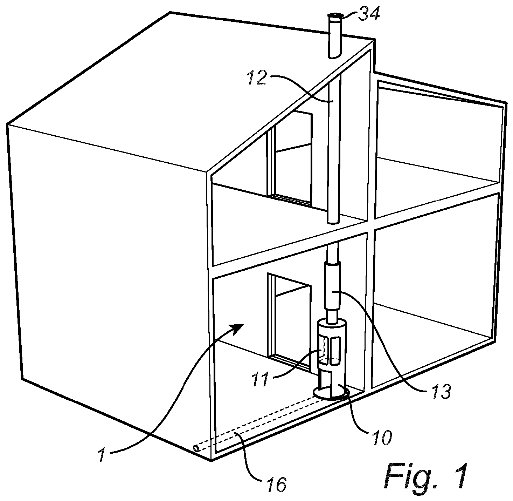

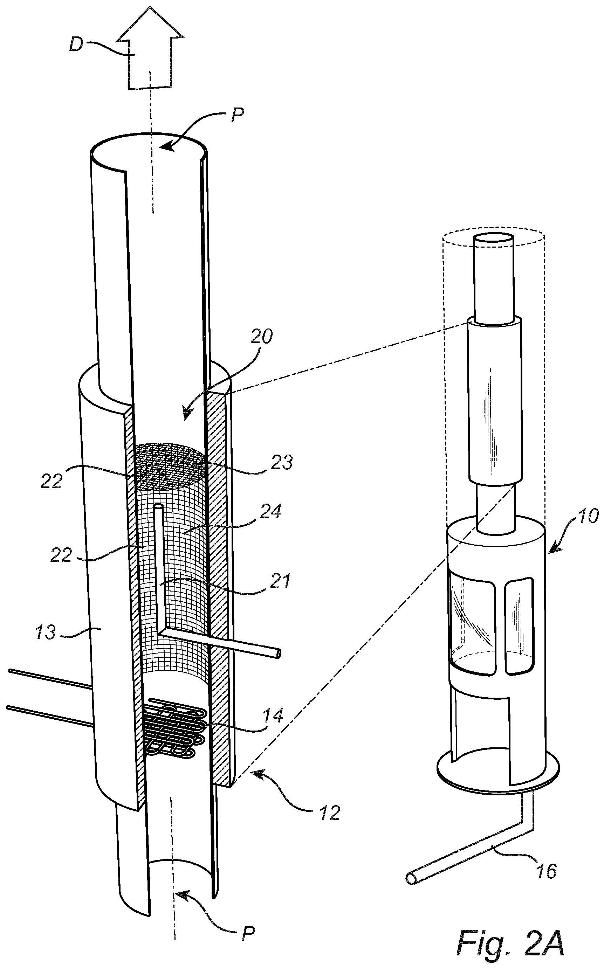

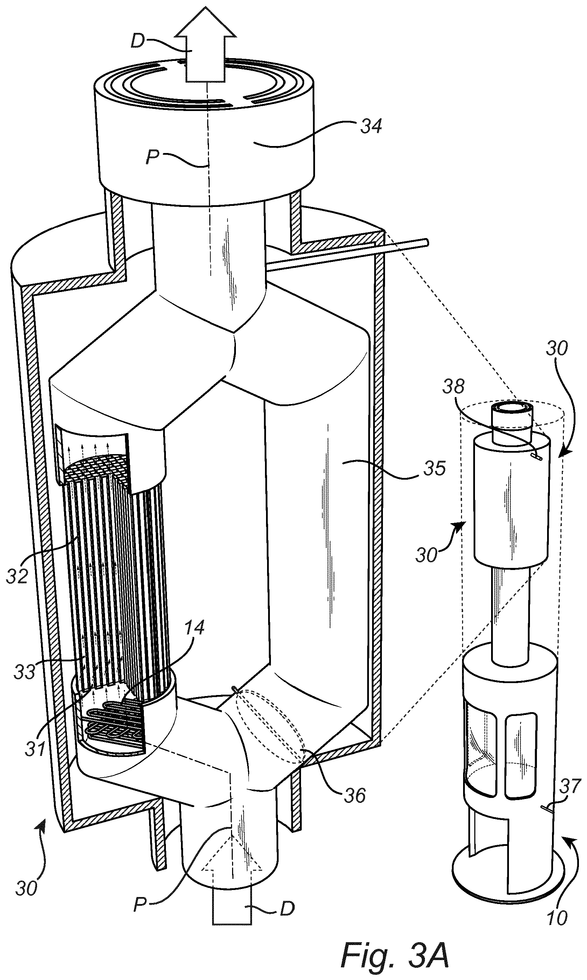

In figure 1, a residential space 1 is shown. Inside the residential space 1, a room heater 10 is positioned. In figure 1, the room heater is exemplified by a stove 10. The room heater 10 is configured to provide comfort heating to the residential space 1 by containing a combustion process of biomass. The biomass may be chopped wood, wood pellets or other materials suitable for burning in the room heater 10. The biomass may be solid or particulate. The room heater 10 comprises a burn chamber 11, configured to hold the burning biomass. The room heater 10 further comprises or is connected to a flue pipe 12, configured to direct exhaust gases from the burning biomass in the burn chamber 11 from the residential space 1. As shown in more detail in figures 2a-b and 3a-c, the exhaust gases are expelled in a direction D along a flow path P defined by the inner walls of the flue pipe 12. The flue pipe 12 may be encased in a wall or chimney of the residential space 1 to counteract residents inadvertently touching it, or it may be kept free-standing as in figure 1 to increase transfer of heat to the residential space 1. A free-standing flue pipe 12 may be insulated through-out its length to minimise the risk of residents getting burned by inadvertently touching a too hot flue pipe.

In Figure 2a, a portion of the flue pipe 12 is shown in a cutaway view. A purifying filter 20 is mounted in the flue pipe 12 such that it occupies a flow path P of the exhaust gases being expelled in a direction D from the residential space 1. The purifying filter 20 is configured to remove particulate matter from the exhaust gases in the flue pipe 12. How this is achieved will be explained in more detail later in the description. The purifying filter 20 is configured to be regenerated. Regeneration of the purifying filter 20 should in the context of this disclosure be understood as the act of removing particulate matter collected in the purifying filter 20 by causing it to combust and be expelled with the exhaust gases. The regeneration temperature may be between 300-600 °C, preferably between 350-500 °C.

The flue pipe 12 comprises an electric air heater 14. The air heater 14 is configured to heat exhaust gases passing the air heater 14, by transferring energy from hot sections of the heater 14 to passing exhaust gases. The hot sections may take the form of loops as in figure 2a. The heater 14 is arranged across the flow path P. The hot sections may alternatively be flanges or a monolithic block with channels. The hot sections of the depicted electric air heater 14 are heated by an electric current passing through resistive elements of the air heater 14. Heating the exhaust gases may increase the rate of combustion of particulate matter in the exhaust gases, improving the rate of regeneration of the filter.

The whole flue pipe 12 or at least a portion of the flue pipe 12 is covered by insulation 13. The insulation 13 is made from an insulating material 13, for example glass- or mineral- wool. The insulation 13 can also be made from metal and comprise air-filled pockets, insulating the flue pipe 12. The insulation 13 may counteract emission of heat into the residential space 1 from the flue pipe 12, enabling exhaust gases to retain their temperature for longer during their passage through the flue pipe 12. This enables the exhaust gases to reach the purifying filter 20 with a higher temperature, facilitating combustion of particulate matter collected on the filter from the exhaust gases. In the disclosed embodiment a portion of the flue pipe 12 between the stove 10 and the purifying filter 20 is insulated and the purifying filter 20 as such is also insulated.

The purifying filter 20 shown in figure 2a, comprises an electrostatic charging electrode 21. The electrode 21 is configured to charge particles in the exhaust gases negatively by transferring electrons to said particles. The purifying filter 20 also comprises a collector 22. The collector 22 is configured to be oppositely (in this case positively) charged, thereby attracting the negatively charged particles in the exhaust gases and causing them to stick to the surface of the collector 22. The surface of the collector 22 is coated with a catalytic material, such as platinum, palladium or rhodium. The catalytic material may lower the temperature of combustion of particles in contact with it, thereby facilitating regeneration of the filter and increasing the rate of combustion of particulate matter. Although preferable, the collector 22 does not have to comprise catalytic materials - it is possible to rely on the exhaust gases being of sufficient temperature when they reach the collector 22 to enable regeneration of the filter.

The collector 22 is configured to minimally obstruct the flow of exhaust gases through the flue pipe 12 - the electrostatic charge of the particles facilitates said particles travelling towards the collector 22 enabling the collector 22 to have a high throughput of exhaust gases and still collect particulate matter from the exhaust gases. The collector 22 may comprise a collection member 23 in the form of a mesh which extends across the flow path P formed by the flue pipe 12. The collection member 23 might not be a mesh. For instance, it can be a monolithic block comprising channels through which the exhaust gases must pass, an arrangement of blocks or flanges with no channels, a grate or a coiled wire. The collection member 23 is configured to attract and collect charged particulate matter from the exhaust gases.

The collector 22 also comprises inside wall portions 24 in the form of nets with a catalytic surface. The inside wall portions 24 enable collection of charged particulate matter near the walls of the flue pipe 12. The inside wall portions 24 essentially extend along a portion of the inside walls of the flue pipe 12

To drive the combustion process in the burn chamber 11, air is exchanged in the burn chamber 11 by way of the flue pipe 12 and an air inlet 16, causing a natural draft from the space 1 through the burn chamber 11 and out through the flue pipe 12. When a collection member 23 and inside wall portions 24 are both employed in the purifying filter 20, it is preferable that they are oriented in succession along the flow path P as seen in the flow direction D such that exhaust gasses pass the inside wall portions 24 before passing the collection member 23. This enables the inside wall portions 24 to collect a greater amount of particulate matter than if they would be employed after the collection member 23, which is preferable as they have a lesser impact on the flow than the collection member 23 when carrying particulate matter.

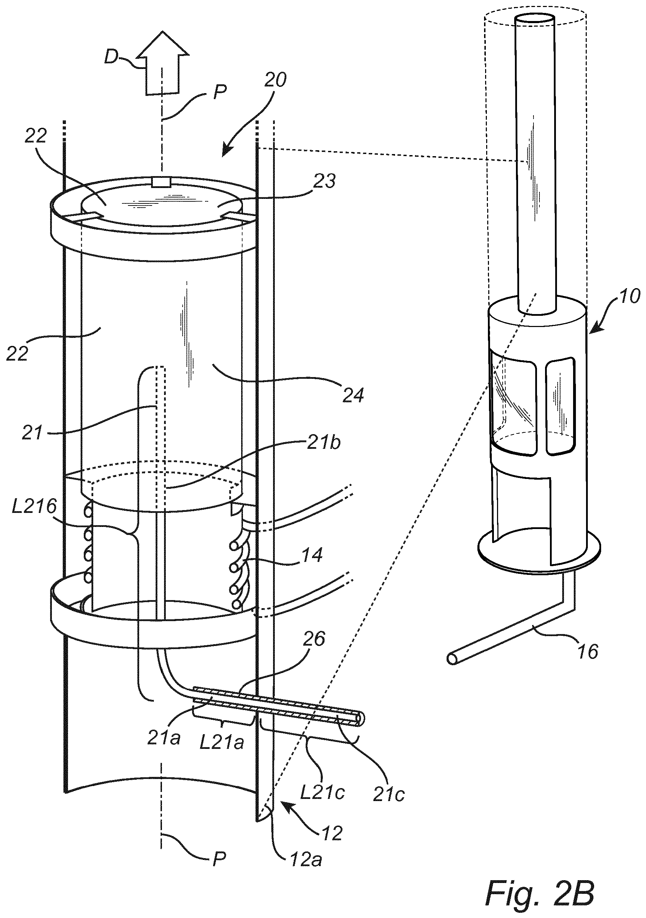

In figure 2b there is disclosed an embodiment of the invention as claimed herein, which is an alternative embodiment of the design shown in figure 2a.

The electrode 21 comprises a first portion 21a and a second portion 21b. The first portion 21a extends from a wall 12a of the smoke channel or flue pipe 12 a distance L21a into the flow path (P) formed by the smoke channel or flue pipe 12. The first portion 21a is electrically insulated by an insulator 26. The insulator 26 may be in the form of a coating of the electrode. The insulator 26 may be in the form of a ceramic rod. As shown in figure 2b, the insulator 26 also covers a third portion 21c of the electrode 21 extending a distance L21c outside the smoke channel or flue pipe 12. The third electrode portion 21c with its portion of the insulator 26 is also covered by a tubular member 27 connected to the smoke channel or flue pipe 12.

The second portion 21b of the electrode 21 extends a distance L21b inside the flow path P formed by the smoke channel or flue pipe 12. In the preferred embodiment the second portion 21b is oriented such that it extends a distance L21b along the flow path P. The second portion 21b is configured to electrically charge particles and/or molecules in the exhaust gases.

In the embodiment of figure 2b, the heater 14 is designed as coils extending around a tubular member 28 arranged just before the collector 22 as seen along the flow direction D. The heater 14 heats the tubular member 28 which in turn heats the exhaust gases. The tubular member 28 presents a comparably large surface area compared to the surface area of the coils of the heater 14. The inner diameter of the tubular member 28 is slightly smaller than the inner diameter of the collector 22 as defined by the inside side walls 24 of the collector 22. In an alternative embodiment, the heater 14 is, as an alternative to or as a complement to being coiled around the tubular member 28, coiled around the side walls 24 of the collector along a portion of or along the whole length of the side walls 24 as seen along the flow direction D. Thereby the heater 14 may efficiently heat the collector 22 from an outside of the side walls 24 of the collector 22.

It may be noted that it is also conceivable that a certain feature disclosed in figure 2a or disclosed in the description as an alternative thereto may be combined with a feature disclosed in figure 2b or disclosed in the description as an alternative thereto unless technical constraints explicitly exclude such a combination. It may e.g. be noted that the design of the heater 14 in figure 2a may be used in the design shown in figure 2b or vice versa. It is even conceivable to use both the heater 14 of figure 2a and the heater 14 of figure 2b. The electrical insulator 26 disclosed in figure 2b may e.g. also be used in a filter 20 design in accordance with figure 2a. The insulation 13 of the pipe 12 disclosed in figure 2a may be used in the embodiment of figure 2b. The pipe 12 without insulation as disclosed in figure 2b may be used in the embodiment of figure 2a.

It may be noted that it is conceivable to use a fan 34 as disclosed in figure 3a also in the embodiments shown in figures 2a-b. However, the pressure drop over the filter 20 is typically sufficiently low such that there in most cases is no need for any fan 34. Thus, in a preferred embodiment, the filter 20 is not combined with a fan 34, which e.g. is the case in the embodiments of figure 2a-b. It may be noted that it is conceivable to use a bypass 35 as disclosed in figure 3a also in the embodiments shown in figures 2a-b. However, the pressure drop over the filter 20 is typically sufficiently low such that there in most cases is no need for any bypass 35. Thus, in a preferred embodiment, the filter 20 is not combined with a bypass 35, which e.g. is the case in the embodiments of figure 2a-b.

In figure 3a another type of purifying filter 30 is disclosed. Exhaust gas may enter the bottom of the purifying filter 30 in the flow direction D along the flow path P, into inlet channels 31. The inlet channels 31 are plugged at the far end as seen along the flow direction D, such that the exhaust gases may not pass through the purifying filter 30 through an inlet channel 31. The gases may be forced through a membrane 32 into outlet channels 33. Such a filter may e.g. be designed with a support structure e.g. formed of silicon carbide (SiC) or aluminium titanate. Inside the channels there is typically a coating, a so-called washcoat, increasing the particle depositing capability of the filter. This washcoat may e.g. be gamma alumina Al2O2, zeolites, ceria (CeO2), vanadium (V5O2). The membrane 32 may comprise a catalytic surface material, similar to the purifying filter 20 described above. The membrane 32 is configured to collect particulate matter from the exhaust gases, and to regenerate at a sufficiently high temperature. The outlet channels 33 are open in the flow direction D such that the exhaust gases can be expelled from the purifying filter 30. This enables a far greater surface area of the membrane 32 than if it were simply placed perpendicularly across the flow path P, and allows for a lesser pressure drop than having several membranes 32 in such a manner consecutively would. These variations are of course also possible.

This construction of the purifying filter 30 may give rise to a pressure drop over the purifying filter 30. Said pressure drop may be between 50-500 Pa, preferably between 100-300 Pa, at a flow rate of 40m³/h at 300°C. To mitigate this pressure drop, a fan 34 is employed. The fan 34 may be any type of fan 34 suitable for drawing gases through the flue pipe 12 and the purifying filter 30. It is preferable, but not necessary, that the fan 34 is positioned after the purifying filter 30 as seen in a flow direction D and more preferable that the fan be positioned in a vicinity of an outlet of the flue pipe 12. A "vicinity" may in the preferred embodiment mean within 10% of the length of the flue pipe 12. As shown in figure 1, the fan 34 is in a preferred embodiment positioned at the mouth of the flue pipe 12.

The flue pipe 12 in figure 3a is also provided with a bypass 35. The bypass 35 is provided with a valve 36 by which the bypass may be opened or closed. If the room heater 10 is opened, for instance to provide more biomass for burning to the burn chamber 11, the pressure build-up near the purifying filter 30 may cause a backdraft which may expel exhaust gases into the residential space 1 from the burn chamber 11. The bypass 35 may be configured to be open when the burn chamber 11 is open, thereby relieving the pressure into the flue pipe 12 instead of the residential space 1 and reducing the amount of exhaust gases expelled into the residential space 1. The bypass 35 may be configured to open when a sensor detects build-up of pressure near the purifying filter 30. Such a configuration also provides the possibility of opening the bypass 35 if the purifying filter 30 becomes clogged with particulate matter, increasing pressure and lessening the efficiency of the combustion in the burn chamber 11. The bypass 35 may be configured to be opened in response to a sudden loss of pressure in the burn chamber 11 detected by a pressure sensor 37 indicating that the door to the burn chamber 11 has been opened. The bypass 35 may be configured to be opened in response to a sudden loss of pressure in the flue pipe 12 detected by a pressure sensor 38 indicating that exhaust gases no longer is pushed through the purifying filter 30 which in turn indicates that the door to the burn chamber 11 has been opened. The bypass 35 may be configured to be opened in response to a sensor detecting the actual opening of the door, such as a by a sensor connected to the door lock, the door handle, the door hinge or the like. The bypass 35 may also be configured to be manually opened. It may be noted that with opening the bypass 35 is meant manoeuvring of the valve 36 or any other kind of valve arrangement capable.

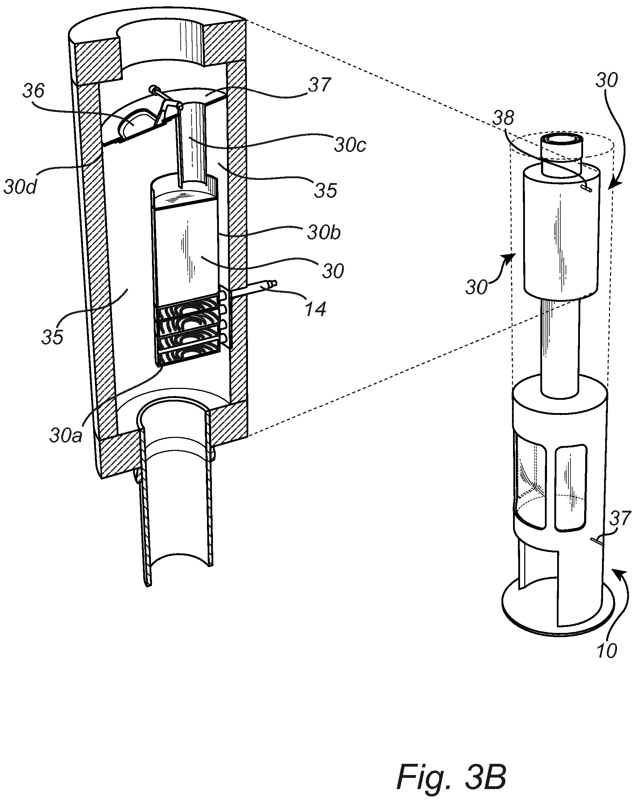

In figure 3b there is disclosed an alternative embodiment of the design shown in figure 3a.

In the embodiment of figure 3a, the bypass 35 is formed as a separate pipe running in parallel to a pipe housing the filter 30. In the embodiment of figure 3b, the filter 30 is arranged in an inner pipe 30a-c which in turn is arranged inside an outer pipe 30d, whereby the annular space formed between an outside of the inner pipe 30a-c and an inside of the outer pipe 30d forms said bypass 35. As shown in figure 3b, the inner pipe 30a-c comprises an entrance portion 30a, a central portion 30b holding the filter 30 and an exit portion 30c extending to a divider plate 37 extending across the smoke channel or flue pipe 12. The divider plate 37 has one through-going opening connected to the exit portion 30c. The divider plate 37 has also a through-going opening which is connected to the bypass 35 and which is openable or closeable by a valve 36. In the embodiment of figure 3b, the divider plate 37 and valve 36 is arranged downstream the filter 30 but it is also conceivable to have the divider plate 37 and valve 36 upstream the filter 30. In figure 3b, the heater 14 is arranged inside the entrance portion 30a of the inner pipe 30a-c. The heater 14 comprises a plurality of layers extending across the flow path P. The divider plate 37 and the valve 36 may also be arranged within the extent of the filter 30 as seen along the flow direction D.

It may be noted that it is also conceivable that a certain feature disclosed in figure 3a or disclosed in the description as an alternative thereto may be combined with a feature disclosed in figure 3b or disclosed in the description as an alternative thereto unless technical constraints explicitly exclude such a combination. It may e.g. be noted that the design of the heater 14 in figure 3a may be used in the design shown in figure 3b or vice versa.

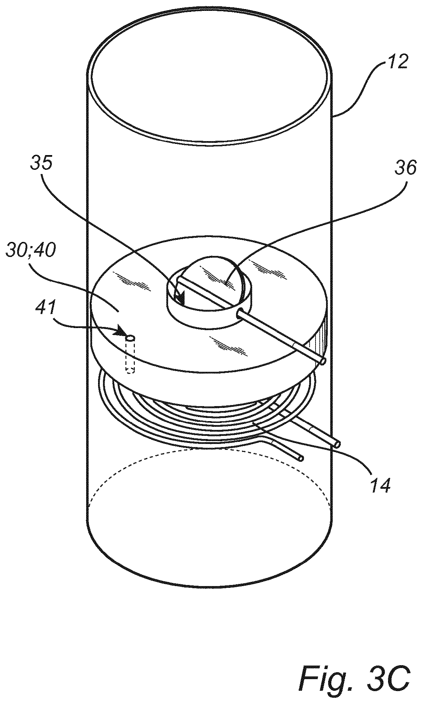

In figure 3c there is disclosed an embodiment which may be seen as an alternative to the design shown in figure 3a. In the design of figure 3c, the bypass 35 is arranged as a pipe inside the filter 30. The bypass 35 is provided with a valve 36 extending across the pipe formed by the bypass 35. In the embodiment of figure 3c, the valve 36 is arranged after the filter 30 as seen along the flow direction D. However, the valve 36 may be arranged before the filter 30. Alternatively, the valve 36 may be arranged within the extent of the filter 30 as seen along the flow direction D.

In the embodiment of figure 3c, there is also disclosed a variant of the filter 30. In the variant of the filter of figure 3c, the purifying filter 40 comprises a plurality of through-going channels 41. Each through-going channel 41 preferably has a cross-sectional area being less than 1% of the cross-sectional area of the flow path P formed by the smoke channel or flue pipe 12. The through-going channels 41 comprise a catalytic surface material. The catalytic surface material may be of the kind disclosed above in relation to the filter 20.

It may be noted that the filter 40 may be used instead of the filter 30 disclosed in figures 3a and 3b. Likewise may the filter 30 disclosed in figures 3a and 3b be used in the design disclosed in figure 3c.

It is contemplated that there are numerous modifications of the embodiments described herein, which are still within the scope of the invention as defined by the appended claims.

As mentioned above, the purifying filter may alternatively be positioned in a smoke channel 12 of the room heater 10, i.e. inside the casing of the room heater 10. This is indicated by the dashed lines in figures 2 and 3, where the casing in dashed lines also encloses the purifying filter. In practice the purifying filter is in such a design typically positioned closer to the burn chamber and the height of the room heater 10 is lower than as indicated by the dashed lines in figures 2a and 3a.

The space 1 may for instance be e.g. a residential building, a restaurant, hotel lobby, store or ski lodge. Instead of, or as a complement to, an air heater 14, it is possible to heat the purifying filter 20, 30 itself, which may cause particulate matter collected on a surface of the purifying filter 20, 30 to reach combustion temperature. This may be done by means of electrical resistance heating if parts of the purifying filter 20, 30 are made of metal, such as the membrane 31 or the collector 22. The purifying filter 20, 30 may also be provided with additional heating in some other way.

The system described above may be used in accordance with the following.

Solid or particulate biomass may be loaded into the burn chamber 11 of the room heater 10 being positioned in a space 1 with the intent to provide residential comfort heating. By the term "residential comfort heating" may in the context of this disclosure be understood as heating intended to make a space 1 more inhabitable or pleasurable for humans. The biomass in the burn chamber 11 may then be ignited, causing it to burn. Hot exhaust gases created as a result of the burning of the biomass may be directed via the flue pipe 12 out of the space 1. The hot exhaust gases thus directed will then pass a purifying filter 20, 30 in the flue pipe 12. The purifying filter 20, 30 may be regenerated by the means discussed above.

The decision to start regeneration of the filter 20, 30 may be triggered by a number of different events. The regeneration may be triggered in a predetermined time interval, which may be calculated in absolute terms and/or in terms of amount of time the room heater has been used. This kind of time controlled regeneration is especially useful if the purifying filter is heated as such, e.g. be electrical resistance heating of the purifying filter to the regeneration temperature. The regeneration may be triggered if it is detected that the exhaust gases has a temperature close to the regeneration temperature, whereby e.g. the air heater 14 is activated to give the temperature increase needed. If the exhaust gases as such reach the regeneration temperature, there is no triggering of the regeneration, the regeneration will automatically occur. The regeneration may be triggered by the resident. The regeneration may be triggered by one or more sensor directly or indirectly measuring the amounts of particles on the filter surfaces. A measurement may be a determination of the pressure drop over the filter; a more clogged filter will typically cause a greater pressure drop. **It** is also possible to measure the composition of the exhaust gases after the filter, and compare the measurements to reference measurements which may indicate more or less particulate matter being collected on the filter. Another possibility is to employ a lambda sensor, measuring the proportion of oxygen in the exhaust gas. **It** is also possible to measure the electrical resistance of the filter 20, where more soot typically would contribute to a lower electrical resistance.

**It** may also be noted that the filters 20, 30, and 40 may be combined with each other with one kind of filter arranged before the other. **It** is e.g. conceivable to use the filter 40 with through-going channels 41 or the filter 20 with an electrode 21 to catch comparable large particles and then arranged the filter 30 with the membrane 32 downstream to catch finer particles. It is also conceivable to arrange other kinds of filters or the like upstream or downstream any of the filters 20, 30, 40 disclosed above. **It** is e.g. conceivable to use a metal substrate, mesh or grid being positioned upstream any of the filters 10, 20, 30 to catch comparable large particles. Such metal substrate, mesh or grid may also comprise a catalytic surface material of the kind disclosed above.

## Claims

1. Method for providing residential comfort heating in a space (1) in a building, the method comprising:
burning biomass in a burn chamber (11) of a room heater (10), the room heater (10) being positioned in a space (1) to which space (1) the room heater (10) is intended to provide residential comfort heating,
directing hot exhaust gases resulting from the burning of biomass from the burn chamber (11) via a flue pipe (12) to an outdoor environment outside the building,
purifying said exhaust gases by directing said exhaust gases through a purifying filter (20; 30) in a smoke channel (12) in the room heater (10), and
regenerating the purifying filter (20; 30) by providing hot exhaust gases at a regeneration temperature of the purifying filter (20; 30),
wherein the purifying filter (20; 30) comprises
an electrode (21) configured to electrically charge particles and/or molecules in the exhaust gases, and
a collector (22) carrying an opposite charge, relative to the electrically charged particles, or being charge neutral,
wherein the collector comprises inside wall portions (24) of the smoke channel (12) and enabling collection of charged particulate matter near the inside walls of the smoke channel (12),
wherein the method further comprises
additional heating of the purifying filter using an additional heater (14)
**characterized in** said additional heater (14) being positioned around the purifying filter (20; 30), and in heat insulating the purifying filter (20; 30),
wherein the purifying filter (20; 30) is positioned inside the casing of the room heater (10).

2. Method according to claim 1, further comprising providing additional heating of said exhaust gases in the smoke channel or flue pipe (12) using an air heater (14) such that the additionally heated exhaust gases directed through the purifying filter (20; 30) reach a regeneration temperature of the purifying filter (20; 30).

3. Method according to any one of claims 1-2, wherein the purifying filter (20; 30) comprises a catalytic surface material.

4. Method according to any one of claims 1-3, wherein the purifying filter (20; 30) comprises a collection member (23) comprising a catalytic surface material.

5. Method according to any one of claims 1-4, wherein the inside wall portions (24) comprises a catalytic surface material.

6. Method according to any one of claims 1-5 further comprising
exchanging air in the burn chamber (11) by configuring the flue pipe (12) and an air inlet to the burn chamber (11) to provide a natural draft drawing air into the burn chamber (11) and expelling exhaust gases via the flue pipe (12) to the outdoor environment.

7. Method according to any one of claims 1-6, further comprising
drawing air into the burn chamber (11) and expelling exhaust gases via the flue pipe (12) to the outdoor environment using a fan (34), the fan (24) preferably being positioned after the purifying filter (20; 30) as seen along a flow direction (D) through the flue pipe (12), the fan (34) more preferably being positioned in the vicinity of a flue pipe (12) mouth towards the outdoor environment.

8. Method according to any one of claims 1-7, wherein the flue pipe (12) is provided with a bypass (35) selectively allowing exhaust gases to bypass the purifying filter (30).

9. Method according to any one of claims 1-8, wherein the regeneration temperature is between 300-600 °C, preferably between 350-500 °C.

10. System for providing residential comfort heating in a space (1) in a building, the system comprising:
a room heater (10) having a burn chamber (11),
a flue pipe (12) configured to direct hot exhaust gases from the burn chamber (11) to an outdoor environment outside the building, and
a purifying filter (20; 30) positioned in a smoke channel of the room heater (10) and configured to purify said exhaust gases directed through the purifying filter (20; 30), the purifying filter (20; 30) being configured to be regenerated by providing hot exhaust gases at a regeneration temperature of the exhaust gas purifying filter (20; 30),
wherein the purifying filter (20; 30) comprises
an electrode (21) configured to electrically charge particles and/or molecules in the exhaust gases, and
a collector (22) carrying an opposite charge, relative to the electrically charged particles, or being charge neutral,
wherein the collector comprises inside wall portions (24) of the smoke channel (12),
wherein the system further comprises
an additional heater (14),
**characterized in** said additional heater (14) being positioned around the purifying filter (20; 30), and by further comprising
insulation (13) heat insulating the purifying filter (20; 30),
wherein the purifying filter (20; 30) is positioned inside the casing of the room heater (10).

## Patentansprüche

1. Verfahren zum Bereitstellen einer Wohnkomfortheizung in einem Raum (1) in einem Gebäude, wobei das Verfahren Folgendes umfasst:
Verbrennen von Biomasse in einer Brennkammer (11) einer Raumheizung (10), wobei die Raumheizung (10) in einem Raum (1) positioniert ist, wobei die Raumheizung (10) dazu bestimmt ist, dem Raum (1) eine Wohnkomfortheizung bereitzustellen,
Leiten heißer Abgase, die aus der Verbrennung von Biomasse resultieren, aus der Brennkammer (11) über ein Rauchrohr (12) in eine Außenumgebung außerhalb des Gebäudes,
Reinigen der Abgase durch Leiten der Abgase durch einen Reinigungsfilter (20; 30) in einem Rauchkanal (12) in der Raumheizung (10), und
Regenerieren des Reinigungsfilters (20; 30) durch Bereitstellen heißer Abgase bei einer Regenerationstemperatur des Reinigungsfilters (20; 30),
wobei der Reinigungsfilter (20; 30) Folgendes umfasst
eine Elektrode (21), die dazu ausgebildet ist, Teilchen und/oder Moleküle in den Abgasen elektrisch aufzuladen, und
eine Auffangvorrichtung (22), die eine zu den elektrisch aufgeladenen Teilchen entgegengesetzte Ladung trägt oder ladungsneutral ist,
wobei die Auffangvorrichtung Innenwandabschnitte (24) des Rauchkanals (12) umfasst und ein Auffangen von geladenen Schwebstoffteilchen in der Nähe der Innenwände des Rauchkanals (12) ermöglicht,
wobei das Verfahren ferner Folgendes umfasst zusätzliches Erwärmen des Reinigungsfilters mittels einer zusätzlichen Heizung (14), **dadurch gekennzeichnet,**
**dass** die zusätzliche Heizung (14) um den Reinigungsfilter (20; 30) herum angeordnet ist, und durch Wärmeisolieren des Reinigungsfilters (20; 30),
wobei der Reinigungsfilter (20; 30) innerhalb des Gehäuses der Raumheizung (10) positioniert ist.

2. Verfahren nach Anspruch 1, ferner umfassend Bereitstellen eines zusätzlichen Erwärmens der Abgase in dem Rauchkanal oder dem Rauchrohr (12) unter Verwendung einer Luftheizung (14), so dass die zusätzlich erwärmten Abgase, die durch den Reinigungsfilter (20; 30) geleitet werden, eine Regenerationstemperatur des Reinigungsfilters (20; 30) erreichen.

3. Verfahren nach einem der Ansprüche 1-2, wobei der Reinigungsfilter (20; 30) ein katalytisches Oberflächenmaterial umfasst.

4. Verfahren nach einem der Ansprüche 1-3, wobei der Reinigungsfilter (20; 30) ein Auffangelement (23) umfasst, das ein katalytisches Oberflächenmaterial umfasst.

5. Verfahren nach einem der Ansprüche 1-4, wobei die Innenwandabschnitte (24) ein katalytisches Oberflächenmaterial umfassen.

6. Verfahren nach einem der Ansprüche 1-5, ferner umfassend
Austauschen von Luft in der Brennkammer (11) durch Ausbilden des Rauchrohrs (12) und eines Lufteinlasses in die Brennkammer (11), um eine natürliche Strömung bereitzustellen, die Luft in die Brennkammer (11) saugt und Abgase über das Rauchrohr (12) in die Außenumgebung ausstößt.

7. Verfahren nach einem der Ansprüche 1-6, ferner umfassend
Ansaugen von Luft in die Brennkammer (11) und Ausstoßen von Abgasen über das Rauchrohr (12) in die Außenumgebung unter Verwendung eines Gebläses (34), wobei, entlang der Strömungsrichtung (D) durch das Rauchrohr (12) gesehen, das Gebläse (24) vorzugsweise nach dem Reinigungsfilter (20; 30) positioniert ist, wobei das Gebläse (34) stärker bevorzugt in der Nähe einer Mündung des Rauchrohrs (12) zur Außenumgebung hin positioniert ist.

8. Verfahren nach einem der Ansprüche 1-7, wobei das Rauchrohr (12) mit einer Umgehung (35) versehen ist, die selektiv ermöglicht, dass Abgase den Reinigungsfilter (30) umgehen.

9. Verfahren nach einem der Ansprüche 1-8, wobei die Regenerationstemperatur zwischen 300-600 °C, vorzugsweise zwischen 350-500 °C liegt.

10. System zum Bereitstellen einer Wohnkomfortheizung in einem Raum (1) in einem Gebäude, wobei das System Folgendes umfasst:
eine Raumheizung (10) mit einer Brennkammer (11),
ein Rauchrohr (12), das dazu ausgebildet ist, heiße Abgase aus der Brennkammer (11) in eine Außenumgebung außerhalb des Gebäudes zu leiten, und
einen Reinigungsfilter (20; 30), der in einem Rauchkanal der Raumheizung (10) positioniert und dazu ausgebildet ist, die durch den Reinigungsfilter (20; 30) geleiteten Abgase zu reinigen, wobei der Reinigungsfilter (20; 30) dazu ausgebildet ist, durch Bereitstellen heißer Abgase bei einer Regenerationstemperatur des Abgasreinigungsfilters (20; 30) regeneriert zu werden,
wobei der Reinigungsfilter (20; 30) Folgendes umfasst
eine Elektrode (21), die dazu ausgebildet ist, Teilchen und/oder Moleküle in den Abgasen elektrisch aufzuladen, und
eine Auffangvorrichtung (22), die eine zu den elektrisch aufgeladenen Teilchen entgegengesetzte Ladung trägt oder ladungsneutral ist,
wobei die Auffangvorrichtung Innenwandabschnitte (24) des Rauchkanals (12) umfasst,
wobei das System ferner Folgendes umfasst
eine zusätzliche Heizung (14), **dadurch gekennzeichnet, dass** die zusätzliche Heizung (14) um den Reinigungsfilter (20; 30) herum angeordnet ist, und dadurch, dass es ferner Folgendes umfasst
eine Isolierung (13), die den Reinigungsfilter (20; 30) wärmeisoliert,
wobei der Reinigungsfilter (20; 30) innerhalb des Gehäuses der Raumheizung (10) positioniert ist.

## Revendications

1. Procédé de fourniture d'un chauffage de confort résidentiel dans un espace (1) d'un bâtiment, le procédé comprenant :
la combustion de biomasse dans une chambre de combustion (11) d'un dispositif de chauffage de pièce (10), le dispositif de chauffage de pièce (10) étant positionné dans un espace (1), espace (1) auquel le dispositif de chauffage de pièce (10) est destiné à fournir un chauffage de confort résidentiel,
la direction de gaz d'échappement chauds résultant de la combustion de la biomasse de la chambre de combustion (11), par le biais d'un tuyau de fumée (12), vers un environnement extérieur au bâtiment,
la purification desdits gaz d'échappement par la direction desdits gaz d'échappement à travers un filtre épurateur (20 ; 30) dans un canal de fumée (12) dans le dispositif de chauffage de pièce (10), et
la régénération du filtre épurateur (20 ; 30) par la fourniture de gaz d'échappement chauds à une température de régénération du filtre épurateur (20 ; 30),
dans lequel le filtre épurateur (20 ; 30) comprend une électrode (21) conçue pour charger électriquement des particules et/ou des molécules dans les gaz d'échappement, et
un collecteur (22) portant une charge opposée par rapport aux particules chargées électriquement, ou étant neutre en charge,
dans lequel le collecteur comprend des parties de paroi intérieure (24) du canal de fumée (12) et permet la collecte de matières particulaires chargées à proximité des parois intérieures du canal de fumée (12),
le procédé comprenant en outre :
le chauffage supplémentaire du filtre épurateur à l'aide d'un dispositif de chauffage supplémentaire (14),
**caractérisé en ce que** ledit dispositif de chauffage supplémentaire (14) est positionné autour du filtre épurateur (20 ; 30), et par
l'isolation thermique du filtre épurateur (20 ; 30),
dans lequel le filtre épurateur (20 ; 30) est positionné à l'intérieur du boîtier du dispositif de chauffage de pièce (10).

2. Procédé selon la revendication 1, comprenant en outre la fourniture d'un chauffage supplémentaire desdits gaz d'échappement dans le canal de fumée ou le tuyau de fumée (12) à l'aide d'un dispositif de chauffage d'air (14) de telle sorte que les gaz d'échappement plus chauffés dirigés à travers le filtre épurateur (20 ; 30) atteignent une température de régénération du filtre épurateur (20 ; 30).

3. Procédé selon l'une quelconque des revendications 1 et 2, dans lequel le filtre épurateur (20 ; 30) comprend un matériau de surface catalytique.

4. Procédé selon l'une quelconque des revendications 1 à 3, dans lequel le filtre épurateur (20 ; 30) comprend un élément collecteur (23) comprenant un matériau de surface catalytique.

5. Procédé selon l'une quelconque des revendications 1 à 4, dans lequel les parties de paroi intérieure (24) comprennent un matériau de surface catalytique.

6. Procédé selon l'une quelconque des revendications 1 à 5, comprenant en outre
l'échange d'air dans la chambre de combustion (11) par la configuration du tuyau de fumée (12) et d'une entrée d'air dans la chambre de combustion (11) pour fournir une aspiration naturelle d'air dans la chambre de combustion (11) et l'expulsion des gaz d'échappement par le biais du tuyau de fumée (12) vers l'environnement extérieur.

7. Procédé selon l'une quelconque des revendications 1 à 6, comprenant en outre
l'aspiration de l'air dans la chambre de combustion (11) et l'expulsion des gaz d'échappement par le biais du tuyau de fumée (12) vers l'environnement extérieur à l'aide d'un ventilateur (34), le ventilateur (24) étant de préférence positionné après le filtre épurateur (20 ; 30), dans une direction d'écoulement (D) à travers le tuyau de fumée (12), le ventilateur (34) étant de préférence positionné à proximité de l'embouchure du tuyau de fumée (12) en direction de l'environnement extérieur.

8. Procédé selon l'une quelconque des revendications 1 à 7, dans lequel le tuyau de fumée (12) est muni d'une dérivation (35) permettant sélectivement aux gaz d'échappement de contourner le filtre épurateur (30).

9. Procédé selon l'une quelconque des revendications 1 à 8, dans lequel la température de régénération est comprise entre 300 et 600°C, de préférence entre 350 et 500°C.

10. Système de fourniture d'un chauffage de confort résidentiel dans un espace (1) d'un bâtiment, le système comprenant :
un dispositif de chauffage de pièce (10) comprenant une chambre de combustion (11),
un tuyau de fumée (12) conçu pour diriger des gaz d'échappement chauds de la chambre de combustion (11) vers un environnement extérieur au bâtiment, et
un filtre épurateur (20 ; 30) positionné dans un canal de fumée du dispositif de chauffage de pièce (10) et conçu pour purifier lesdits gaz d'échappement dirigés à travers le filtre épurateur (20 ; 30), le filtre épurateur (20 ; 30) étant conçu pour être régénéré en fournissant des gaz d'échappement chauds à une température de régénération du filtre épurateur de gaz d'échappement (20 ; 30),
dans lequel le filtre épurateur (20 ; 30) comprend une électrode (21) conçue pour charger électriquement des particules et/ou des molécules dans les gaz d'échappement, et
un collecteur (22) portant une charge opposée par rapport aux particules chargées électriquement, ou étant neutre en charge,
dans lequel le collecteur comprend des parties de paroi intérieure (24) du canal de fumée (12),
le système comprenant en outre
un dispositif de chauffage supplémentaire (14), **caractérisé en ce que** ledit dispositif de chauffage supplémentaire (14) est positionné autour du filtre épurateur (20 ; 30), et comprenant en outre
une isolation (13) isolant thermiquement le filtre épurateur (20 ; 30),
dans lequel le filtre épurateur (20 ; 30) est positionné à l'intérieur du boîtier du dispositif de chauffage de pièce (10).
